# EUROPEAN PATENT APPLICATION

(11) **EP 4 456 442 A2**
(43) Date of publication of application: **30.10.2024**
(21) Application number: 24168321.8
(22) Date of filing: 03.04.2024
(51) Int. Cl.: H04B 7/06

(54) **BEAM INDICATION FOR LTM FACILITATING AN INTERMEDIATE FILTERING STEP FOR TCI STATES**

(30) Priority: 05.04.2023 US 202363457202 P
(71) Applicant: Nokia Technologies Oy, 02610 Espoo (FI)
(72) Inventor: GOYAL, Sanjay, New Jersey, 07834 (US); KOSKELA, Timo, 90670 Oulu (FI); LADDU, Keeth Saliya Jayasinghe, 02140 Espoo (FI)
(74) Representative: Script Intellectual Property LLP

(57) **Abstract**

A method including receiving a MAC control element with a user equipment, where the MAC control element comprises information regarding a list of mobility candidate target cells; and based, at least partially, upon the receiving of the MAC control element, performing an operation with the information.

## Description

### TECHNICAL FIELD

The example and non-limiting embodiments relate generally to user equipment mobility and, more particularly, to beam indication.

### BRIEF DESCRIPTION OF PRIOR DEVELOPMENTS

It is known to use communication beam management in a cell for a user equipment. It is also known that a user equipment can switch between cells, such as when a user equipment moves for example.

### SUMMARY OF THE INVENTION

The following summary is merely intended to be an example. The summary is not intended to limit the scope of the claims.

In accordance with one aspect, a method is provided comprising: receiving a MAC control element with a user equipment, where the MAC control element comprises information regarding a list of mobility candidate target cells; and based at least partially upon the receiving of the MAC control element, performing an operation with the information.

In accordance with another aspect, a method is provided comprising: receiving a MAC control element with a user equipment, where the MAC control element comprises information regarding a list of mobility candidate target cells; and based at least partially upon the receiving of the MAC control element, performing an operation with the information, where the information comprises the list, and where the operation comprises using the list for transmission configuration indication activation or indication, where the information comprises a filtering condition, where the operation comprises using the filtering condition to filter the list of mobility candidate target cells into a smaller filtered list of the mobility candidate target cells; and using the smaller filtered list of the mobility candidate target cells by the user equipment for transmission configuration indication activation or indication, where the operation comprises considering transmission configuration indication states from a common pool of the transmission configuration indication states of mobility candidate target cells only associated with the mobility candidate target cells indicated in the MAC control element.

In accordance with another aspect, a method is provided comprising: receiving a common pool of transmission configuration indication (TCI) states comprising TCI states of one more mobility candidate target cells with a user equipment; receiving a MAC control element with the user equipment, where the MAC control element comprises a filtering condition; based at least partially upon the receiving of the MAC control element, the user equipment using the filtering condition to filter a list of the mobility candidate target cells into a smaller filtered list of the mobility candidate target cells; and the user equipment selecting the TCI states, from the common pool comprising the TCI states of the one or more mobility candidate target cells, only associated with the smaller filtered list of the mobility candidate target cells to create a smaller filtered list of the TCI states.

In accordance with another aspect, an apparatus is provided comprising: at least one processor; and at least one non-transitory memory storing instructions that, when executed with the at least one processor, cause the apparatus to perform: receiving a MAC control element with the apparatus, where the MAC control element comprises information regarding a list of mobility candidate target cells; and based at least partially upon the receiving of the MAC control element, an operation with the information.

In accordance with another aspect, an apparatus is provided comprising: at least one processor; and at least one non-transitory memory storing instructions that, when executed with the at least one processor, cause the apparatus to perform: receiving a MAC control element with the apparatus, where the MAC control element comprises information regarding a list of mobility candidate target cells; and based at least partially upon the receiving of the MAC control element, an operation with the information.

In accordance with another aspect, an apparatus is provided comprising: means for receiving a MAC control element with the apparatus, where the MAC control element comprises information regarding a list of mobility candidate target cells; and means for, based at least partially upon the receiving of the MAC control element, performing an operation with the information.

In accordance with another aspect, a non-transitory program storage device readable by an apparatus is provided, tangibly embodying a program of instructions executable with the apparatus for performing operations, the operations comprising: receiving a MAC control element with the apparatus, where the MAC control element comprises information regarding a list of mobility candidate target cells; and based, at least partially, upon the receiving of the MAC control element, performing an operation with the information.

In accordance with another aspect, a method is provided comprising: determining a first pool of transmission configuration indication (TCI) states for mobility candidate target cells; and determining a filter to be applied to the first pool for determining a second pool which is smaller than the first pool, where the second pool is a filtered pool of the first pool.

In accordance with another aspect, an apparatus is provided comprising: at least one processor; and at least one non-transitory memory storing instructions that, when executed with the at least one processor, cause the apparatus to perform: determining a first pool of transmission configuration indication (TCI) states for mobility candidate target cells; and determining a filter to be applied to the first pool for determining a second pool which is smaller than the first pool, where the second pool is a filtered pool of the first pool.

In accordance with another aspect, an apparatus is provided comprising: means for determining a first pool of transmission configuration indication (TCI) states for mobility candidate target cells; and means for determining a filter to be applied to the first pool for determining a second pool which is smaller than the first pool, where the second pool is a filtered pool of the first pool.

In accordance with another aspect, a non-transitory program storage device readable by an apparatus is provided, tangibly embodying a program of instructions executable with the apparatus for performing operations, the operations comprising: determining a first pool of transmission configuration indication (TCI) states for mobility candidate target cells; and determining a filter to be applied to the first pool for determining a second pool which is smaller than the first pool, where the second pool is a filtered pool of the first pool.

In accordance with another aspect, a method is provided comprising: determining, with a user equipment, whether the user equipment has received a MAC control element with a predetermined type of information relating to transmission configuration indication (TCI) states for mobility candidate target cells; and performing a first operation when the user equipment has determined that the MAC control element has been received; and performing a different second operation when the user equipment has determined that the MAC control element has not been received.

In accordance with another aspect, an apparatus is provided comprising: at least one processor; and at least one non-transitory memory storing instructions that, when executed with the at least one processor, cause the apparatus to perform: determining, with the apparatus, whether the apparatus has received a MAC control element with a predetermined type of information relating to transmission configuration indication (TCI) states for mobility candidate target cells; and performing a first operation when the apparatus has determined that the MAC control element has been received; and performing a different second operation when the apparatus has determined that the MAC control element has not been received.

In accordance with another aspect, an apparatus is provided comprising: means for determining, with a user equipment, whether the user equipment has received a MAC control element with a predetermined type of information relating to transmission configuration indication (TCI) states for mobility candidate target cells; and means for performing a first operation when the user equipment has determined that the MAC control element has been received; and means for performing a different second operation when the user equipment has determined that the MAC control element has not been received.

In accordance with another aspect, a non-transitory program storage device readable by an apparatus is provided, tangibly embodying a program of instructions executable with the apparatus for performing operations, the operations comprising: determining, with the apparatus, whether the apparatus has received a MAC control element with a predetermined type of information relating to transmission configuration indication (TCI) states for mobility candidate target cells; and performing a first operation when the apparatus has determined that the MAC control element has been received; and performing a different second operation when the apparatus has determined that the MAC control element has not been received.

According to some aspects, there is provided the subject matter of the independent claims. Some further aspects are provided in subject matter of the dependent claims.

### BRIEF DESCRIPTION OF DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating an example of a unified TCI state activation/deactivation MAC control element;
FIG. 3 is a diagram illustrating cells and a user equipment;
FIG. 4 is a diagram of an example of a common pool of TCI states for intra-cell beam management and LTM;
FIG. 5 is a diagram illustrating an example of selecting TCI states from the common pool;
FIG. 6 is a diagram illustrating an example method;
FIG. 7 is a diagram illustrating an example method; and
FIG. 8 is a diagram illustrating an example method.

### DETAILED DESCRIPTION

The following abbreviations that may be found in the specification and/or the drawing figures are defined as follows:
- 3GPP: third generation partnership project
- 5G: fifth generation
- 5GC: 5G core network
- AMF: access and mobility management function
- CU: central unit
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- FFS: for further study
- gNB (or gNodeB): base station for 5G/NR, i.e., a node providing NR user plane and control plane protocol terminations towards the UE, and connected via the NG interface to the 5GC
- ICBM: inter-cell beam management
- ID: identification
- I/F: interface
- LS: liaison statement
- LTEl: long term evolution
- LTM: L1/L2 triggered mobility
- MAC: medium access control
- MAC-CE: medium access control - control element
- MME: mobility management entity
- mTRP: multiple transmission and reception point
- ng or NG: new generation
- ng-eNB or NG-eNB: new generation eNB
- NR: new radio
- N/W or NW: network
- PCI: physical cell identifier
- PDCP: packet data convergence protocol
- PHY: physical layer
- RAN: radio access network
- Rel: release
- Rel-17: release 17
- Rel-18: release 18
- RLC: radio link control
- RRH: remote radio head
- RRC: radio resource control
- RS: reference signal
- RSRP: reference signal received power
- RU: radio unit
- Rx: receiver
- SCS: subcarrier spacing
- SDAP: service data adaptation protocol
- SGW: serving gateway
- SMF: session management function
- SMTC: SS/PBCH block measurement time configuration
- SS: synchronization signal
- SSB: synchronization signal block
- TCI: transmission configuration indication
- TS: technical specification
- Tx: transmitter
- UE: user equipment (e.g., a wireless, typically mobile device)
- UPF: user plane function

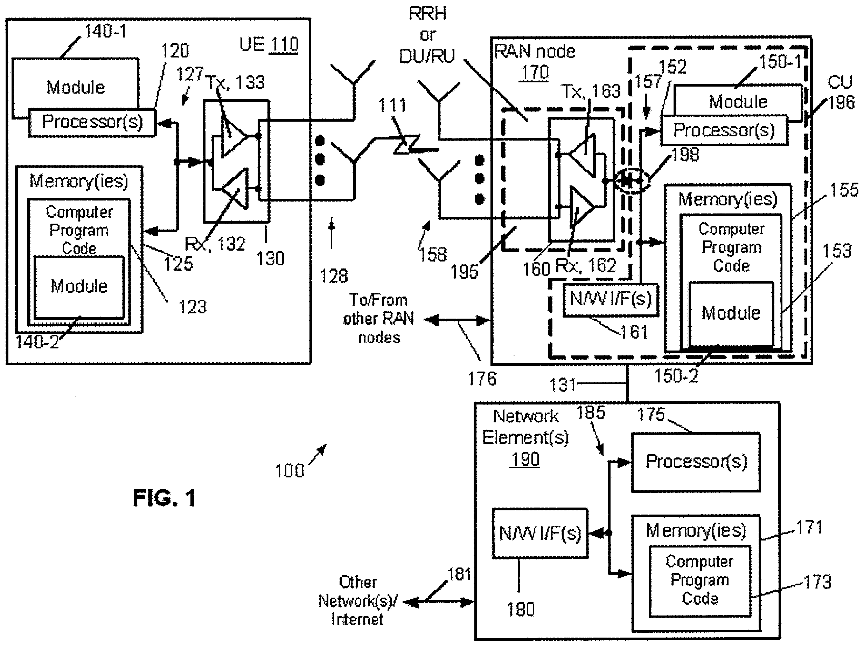

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Currently, in RAN1, there is a discussion on how to provide a beam indication for the LTM (lower layer triggered mobility) using the Rel-17 unified transmission configuration indication based (TCI-based) framework. The beam indication would provide the UE a TCI state that it may apply (i.e. use) in a target cell once a cell switch command has been given, and the UE performs any subsequent communication with the target cell.

However, since each cell is considered as an independent entity in terms of beam management, it is not clear within the current unified TCI state framework and the LTM framework (that allows beam indication for the target cell), how the UE may carry out beam management in the target cell once the cell switch command is applied and UE has received a beam indication from another cell (source cell) before the cell switch (i.e. the UE has been configured with a specific TCI that will be applied after cell switch).

Features as described herein may be used to design a beam indication applicable for intra-cell beam management and/or LTM based beam indication (cell switch) wherein the UE is configured with a single/common TCI list comprising TCI states of one or more cells configured for the LTM. For a single TCI list for LTM candidate cells, the high number of TCI states provided in the list may be considered such as, for example, because the list needs to cover a sufficient amount TCI states to allow LTM based mobility and TCI based beam indication with a current serving cell. Features described herein may relate to when a high number of TCI states configured for beam management. Features described herein may relate also to beam management (serving cell beam management) and beam management after the UE switches to a new candidate cells (that becomes a serving cell).

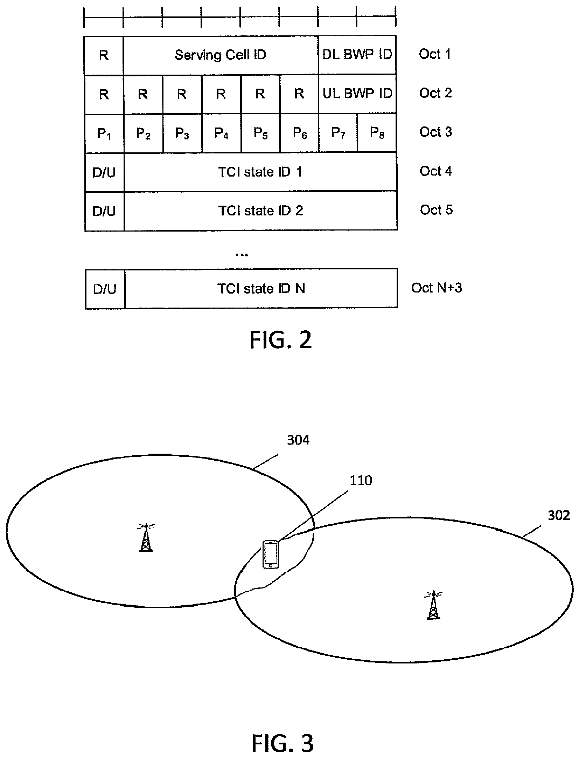

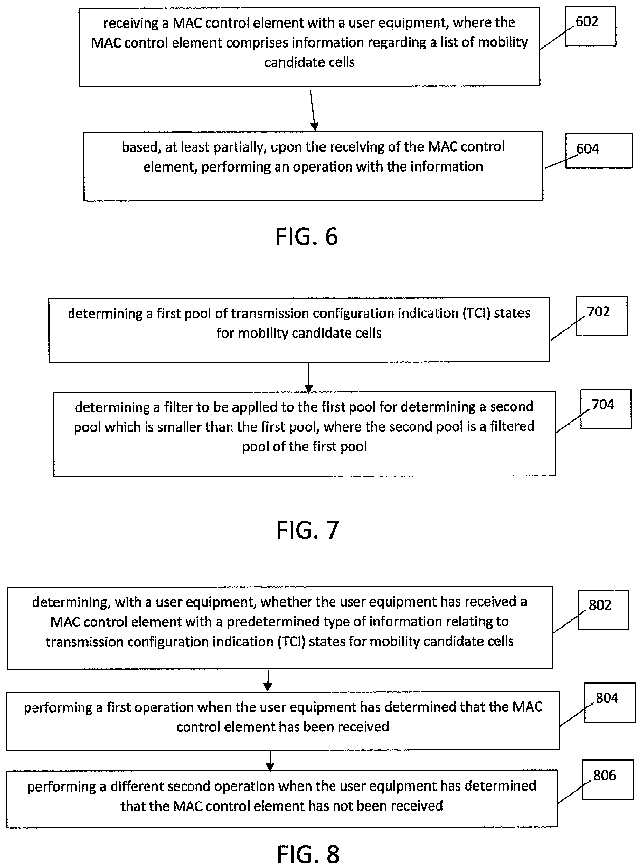

TS 38.321 provides information regarding Unified TCI States Activation/Deactivation MAC CE. Specifically, at 6.1.3.47, the following information is provided:
The Unified TCI States Activation/Deactivation MAC CE is identified by a MAC subheader with eLCID as specified in Table 6.2.1-1b. It has a variable size consisting of following fields:
   - Serving Cell ID: This field indicates the identity of the Serving Cell for which the MAC CE applies. The length of the field is 5 bits. If the indicated Serving Cell is configured as part of a *simultaneousU-TCI-UpdateList1, simultaneousU-TCI-UpdateList2, simultaneousU-TCI-UpdateList3* or *simultaneousU-TCI-UpdateList4* as specified in TS 38.331 [5], this MAC CE applies to all theServing Cells in the set *simultaneousU-TCI-UpdateListl, simultaneousU-TCI-UpdateList2, simultaneousU-TCI-UpdateList3* or *simultaneous U - TCI- UpdateList4,* respectively;
   - DL BWP ID: This field indicates a DL BWP for which the MAC CE applies as the codepoint of the DCI *bandwidth part indicator* field as specified in TS 38.212 [9]. The length of the BWP ID field is 2 bits;
   - UL BWP ID: This field indicates a UL BWP for which the MAC CE applies as the codepoint of the DCI *bandwidth part indicator* field as specified in TS 38.212 [9]. The length of the BWP ID field is 2 bits;
   - Pᵢ: This field indicates whether each TCI codepoint has multiple TCI states or single TCI state. If Pᵢ field is set to 1, it indicates that i^{th} TCI codepoint includes the DL TCI state and the UL TCI state. If Pᵢ field is set to 0, it indicates that i^{th} TCI codepoint includes only the DL/joint TCI state or the UL TCI state. The codepoint to which a TCI state is mapped is determined by its ordinal position among all the TCI state ID fields;
   - D/U: This field indicate whether the TCI state ID in the same octet is for joint/downlink or uplink TCI state. If this field is set to 1, the TCI state ID in the same octet is for joint/downlink. If this field is set to 0, the TCI state ID in the same octet is for uplink;
   - TCI state ID: This field indicates the TCI state identified by *TCI-StateId* as specified in TS 38.331 [5]. If D/U is set to 1, 7-bits length TCI state ID i.e. *TCI-StateId* as specified in TS 38.331 [5] is used. If D/U is set to 0, the most significant bit of TCI state ID is considered as the reserved bit and remainder 6 bits indicate the *UL-TCIState-Id* as specified in TS 38.331 [5]. The maximum number of activated TCI states is 16;
   - R: Reserved bit, set to 0.
And provides figure 6.1.3.47-1 shown in FIG. 2.

An agreement was provided in 3GPP working group 1 (RAN1) meeting 111 held in November 2022 for LTM as follows:
**Agreement**
- For beam indication timing for Rel-18 LTM,
   ✔ Support Scenario 2: Beam indication together with cell switch command,
      ✧ For Rel-17 unified TCI framework,
         - Beam indication indicates TCI state for each target serving cell
   ✔ FFS: Scenario 1: Beam indication before cell switch command
   ✔ FFS: Scenario 3: Beam indication after cell switch command
- FFS: Activation of TCI state(s) of target serving and/or candidate cell(s).

Agreements were provided in 3GPP working group 1 (RAN1) meeting 112 held in Feb-March 2023 as follows:
**Agreement**
   - For L1-RSRP measurement RS configuration
      ∘ For SSB based L1-RSRP measurement:
         ▪ As a starting point, at least the following information needs to be provided to a UE, e.g.
            - For intra- and inter- frequency: PCI or logical ID (e.g., as being defined in R17 ICBM), time domain (e.g. SMTC or periodicity and SSB position in burst)
            - For inter-frequency: frequency domain location (e.g. center frequency), SCS
            - FFS: transmission power (for pathloss calculation)
         ▪ Note: other parameters included in the configuration can be further discussed
         ▪ Including above agreement into the LS
      ∘ The detailed design of RRC structure is up to RAN2, and send an LS to RAN2 to request to work on the RRC structure design on the measurement configuration.
         ▪ Following RAN1 understanding will be provided in the LS
            - RAN1 has discussed the following configuration options for L1 measurement configurations for SSB till RAN1#112:
               ∘ Option 1) Configurations for L1 measurement RS is provided under ServingCellConfig for the serving cells
                  ▪ is useful to reuses the mechanism for Rel-17 ICBM and necessary information to support inter-frequency measurement will be added there.
               ∘ Option 2) Configurations for L1 measurement RS is provided separately from ServingCellConfig for the serving cells and CellGroupConfig for the candidate cells
                  ▪ is useful to avoid the duplicated configurations for L1 measurement RSs, [and avoid UE to process configurations provided under CellGroupConfig for the candidate cells]
               ∘ Option 3) Configurations for L1 measurement RS is provided under CellGroupConfig for the candidate cells
                  ▪ can achieve the similar benefit as Option 2) by directly referring to the candidate cell configurations.
         • Note RAN2 has a full flexibility to design the whole RRC structure design.
         • RAN1 believes this is RAN2 expert region, and respectfully asks RAN2 to finalize the RRC structure design after RAN1 finalizes the discussion on RRC parameters.
         • It is noted that RAN1 foresees the necessity of similar discussions on TCI state pool for candidate cells and L1 measurement report configurations.
**Agreement**
   - The agreement on scenario 2 (Beam indication together with cell switch command) at RAN1#111 is further clarified as the following:
      ✔ Beam indication for the target cell(s) is conveyed in the MAC CE used for LTM triggering for scenario 2
**Agreement**
   - At least for Rel-17 unified TCI framework based beam indication included in cell switch command (i.e. scenario 2), beam indication applies to signals/channels that follow or are configured to follow Rel-17 unified TCI at the target cell(s)
   - FFS: beam indication for mTRP case

Referring also to Fig. 3, an example is shown where a UE 110 is being served with serving cell 302 and there is a target cell 304. Each cell 302 and 304 is considered as an independent entity in terms of beam management. With features as described herein, the UE 110 may carry out beam management in the target cell 304 once a cell switch command is applied, and UE 110 has received a beam indication from the target cell 304 before the cell switch, i.e. the UE 110 has been configured with a specific TCI that will be applied after cell switch.

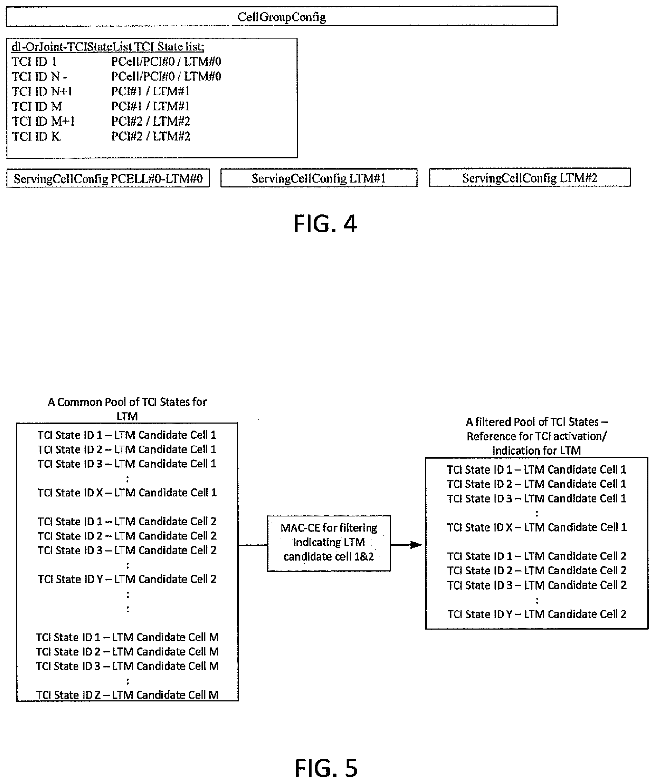

Features as described herein may be used to provide configuration for beam indication within the current unified TCI framework to carry out inter-cell beam indication for the LTM based cell switch, and utilize the indicated beam for subsequent communication for intra or inter-cell beam management within the new cell 304 which will become the new serving cell. This may be used, for example, for the case where a common pool or list of TCI states are configured for the LTM candidate cells, such as 304. Such common pool or list may also include the TCI states of the current serving cell 302, illustrated in FIG. 4. FIG. 4 illustrates a common pool of TCI states for LTM. This common pool of TCI states may also be used for intra-cell beam management within the current serving cell 302.

In one example embodiment, a MAC-CE may be used to provide a filtering condition/criteria to create a filtered list, such as a sub-set for example, of TCI states from the common pool which will be used as reference for further TCI activation and indication.

In one example embodiment, the filtering condition may contain a specific frequency configuration (e.g., absolute reference frequency configuration number, frequency band or/and bandwidth part). Another example of filtering condition may be layer 1 measurement threshold (e.g., RSRP threshold). The filtering condition may be used to select/filter the candidate cells from configured set of candidate cells. The candidate cells may selected/filtered which satisfy the filtering condition. For example, if a specific value of layer 1 measurement threshold is given as the filtering condition, then all the candidate cells for which the layer 1 measurement (e.g., SSB or CSI-RS measurement) is above the given threshold may be selected. A list or pool of TCI states, such as a new list or pool for example, may be formed by considering the TCI states from the common pool which are only associated with the selected/filtered list of candidate cells.

In one example embodiment, as the filtering condition, a MAC-CE may contain a list indicating one or more of LTM candidate cells. The indicated list of cells may be considered as a filtered list of candidate cells. For example, list may contain IDs of LTM candidate cells or IDs of LTM candidate cell configurations or IDs used to indicate LTM candidate cells such as, for example, additional PCIs.

In one example, the list LTM candidate cells may be given as a bit-map, where the number of bits in the bit-map equals the number of configured LTM candidate cells, and one value of a bit (e.g., 1) in the bit-map may indicate the candidate cell is selected for the filtered list.

In another example, the list LTM candidate cells may be given as a bit field, where the number of combinations provided by the bit field equals the number of configured LTM candidate cells, and one value of the bit field (e.g., 001 assuming three-bit field) in the bit field may indicate the candidate cell corresponding to the one value of the bit field. Association of the bit field to the candidate cell may be defined and configured to the UE.

A list or pool of TCI states, such as a new list or pool for example, may be formed by considering the TCI states from the common pool which are only associated with LTM candidate cells indicated in the MAC-CE (as shown in FIG. 5). The new list of TCI states may be considered as reference for any further TCI activation or/and indication for LTM. In one example option, a LTM candidate cell may also be the current serving cell. In one example embodiment, when the UE receives a MAC-CE for filtering the TCI states from the common pool, the earlier list of TCI states may be updated (overridden) by the TCI states derived based on the latest MAC CE. In one example embodiment, the different MAC-CEs filtering the TCI states from the common pool, may be added to a combined list of different TCI states without unique or not duplicated TCI states. In one example, there may be a maximum limit of N TCI states (such as based on the UE capability) across the different MAC-CEs (where "N" is a whole number). The UE may be consider only the latest different (unique) N TCI states.

In one example embodiment, as the filtering condition, a MAC-CE may contain a list indicating one or more TCI states for one or more LTM candidate cells. For example, list may contain IDs of TCI states and the associated LTM candidate cells IDs. A list or pool of TCI states, such as a new list or pool for example, may be formed by considering the TCI states from the common pool which are indicated in the MAC-CE. The new list of TCI states may be considered as reference for any further TCI activation or/and indication for LTM.

In another example embodiment, a filtering condition may be given within the existing MAC-CE used for unified TCI state activation/deactivation. In one example option, when a LTM candidate cell index given in the MAC-CE, the UE may filter out a list of TCI states from the common pool of TCI states which are associated with the indicated LTM candidate cell and this filtered list may be considered as a reference list from which the TCI states to be activated/indicated would be given. In another example option, a field in the MAC-CE may indicate a bit-map, where:
✧ The number of bits of the bit-map equals the number of configured LTM candidate cells (in one example option, including the current serving cell);
✧ The LTM candidate cells may be ordered in the order of associated LTM IDs (e.g., LTM candidate cell IDs, additional PCI, PCI, or LTM candidate cell configuration IDs, or etc.), and the `i'th candidate cell in the order may be linked with the `i' bit in the bit-map in the MAC-CE;
✧ The one value of a bit (e.g., 1) in the bit-map may indicate the TCI states of the respective candidate cell is selected for the reference list; TCI states for all such candidate cells may be filtered (selected) from the common pool and combined to form the reference list from which the TCI states to be activated would be given.

In one example, a LTM candidate cell configured to be part of the filtered list may also be a current serving cell.

In one example embodiment, the UE interpretation may be based on the whether a MAC CE providing the filtering for the TCI state list is provided or not provided.

In one example embodiment, when the filtered list is provided to the UE (in a MAC CE) the UE shall interpret the MAC CE activating the TCI states refers to the list of filtered set of TCI states.

In one example embodiment, the MAC CE providing the filtering of TCI States may comprise an indication whether the filtering provides the active (active filtered list) list of TCI State for MAC CE based TCI state activation. Such activation may be used to activate the TCI states for LTM candidate cell(s) or/and current serving cell (for intra/inter-cell beam management).

In one example embodiment, whenever the filtering MAC CE is received by the UE, it may consider any of the activated TCI states to be not activated.

In one example embodiment, whenever the filtering MAC CE is received by the UE, it may consider any other activated TCI states than the serving cell TCI States, not to be activated such as, for example, TCI states for LTM are considered not to be activated.

In one example embodiment, if the filtering MAC CE is not provided, for the common pool, the UE assumes the list of TCI States that can be referred for the TCI state activation MAC CE to be the TCI states that are associated with the current serving cell.

The RRC configuration framework for the operation described herein may comprise a configuration of TCI state list/pool associated with each candidate cell which may be provided to the UE such as, for example, in the LTM preparation phase. In one example, the configuration may be part of the Reference RRC configuration for LTM; which the UE may retain across multiple cell switches. As shown in the FIG. 4, configuration of TCI states for each of the configured LTM candidate cell may be provided under the "cell group configuration"; and the TCI states of each LTM cell may be referred with an ID within a single list. In another example, configuration of TCI state list may be provided outside of any cell group configuration.

Referring also to Fig. 6, an example embodiment may be provided with a method comprising: receiving a MAC control element with a user equipment, where the MAC control element comprises information regarding a list of mobility candidate target cells as indicated with block 602; and based, at least partially, upon the receiving of the MAC control element, performing an operation with the information as indicated with block 604.

The information may comprise a filtering condition, and where the operation may comprise using the filtering condition to filter the list of mobility candidate target cells into a smaller filtered list of the mobility candidate target cells. The information may comprise the list, and where the operation may comprise using the list for transmission configuration indication (TCI) activation or indication. The list of mobility candidate target cells may comprise at least one of: a list of identifications of mobility candidate target cells, or at least one mobility candidate target cell configuration, or a list of identifications used to indicate mobility candidate target cells. The list of identifications used to indicate mobility candidate target cells may comprise a physical cell identifier. The list of mobility candidate target cells may comprise a current serving cell for the user equipment. The method may further comprise using the smaller filtered list of the mobility candidate target cells by the user equipment for transmission configuration indication (TCI) activation or indication. The operation may comprise considering transmission configuration indication (TCI) states from a common pool of the TCI states of mobility candidate target cells only associated with the filtered list of the mobility candidate target cells . The method may further comprise using the filtered list of the TCI states as reference for a further transmission configuration indication TCI activation or/and indication for triggered mobility (LTM). The operation may comprise updating or overriding an earlier list of the of the mobility candidate target cells with the filtered list of the mobility candidate target cells. The operation may comprise adding at least a portion of the filtered list of the mobility candidate target cells with at least a portion of an earlier list of the of the mobility candidate target cells to form an at least partially combined list. The operation may comprise limiting a number of the mobility candidate target cells on the filtered list of the mobility candidate target cells based upon a predetermined parameter. The operation may comprise limiting a number of transmission configuration indication (TCI) states based upon a predetermined parameter. The predetermined parameter(s) may be a number. The MAC control element may be configured to be used for a unified transmission configuration indication (TCI) state activation and/or deactivation. The information may be a candidate cell index in the MAC control element, where a list of transmission configuration indication (TCI) states associated with the indicated mobility candidate cell index to be considered for use by the user equipment. The list of TCI states may be used as a reference list from which the TCI states to be activated or indicated. The information may comprise a field of the MAC control element which indicates a bit-map. A number of bits of the bit-map may equals a number of configured ones of the mobility candidate target cells. The mobility candidate target cells may be ordered in an order of associated triggered mobility IDs and an `i'th candidate cell in the order is linked with an 'i' bit in the bit-map in the MAC control element. A one (" 1") value of a bit in the bit-map indicates that a TCI state of a respective candidate cell is selected for the reference list. The information may comprise an indication whether filtering provides an active filtering list of transmission configuration indication (TCI) state for the MAC control element based transmission configuration indication (TCI) state activation with at least one of: beam indication for one or more LTM candidate cells, intra cell beam management for the current serving cell; Inter-cell beam management for the current serving cell; or a combination of one or more of the above. The method may further comprise, when the MAC control element is a filtering MAC CE which is received by the user equipment, the user equipment considers any activated transmission configuration indication (TCI) states to be not activated. The method may further comprise, when the MAC control element is a filtering MAC CE which is received by the user equipment, the user equipment considers any activated transmission configuration indication (TCI) states than a serving cell transmission configuration indication (TCI) states to be not activated. The method may further comprise determining whether the MAC control element comprises the information, and not performing the operation when the user equipment determines that the MAC control element does not comprises the information. The method may further comprise determining whether the MAC control element is received by the user equipment, and performing a predetermined process when the user equipment determines that the MAC control element is not received by the user equipment. When the user equipment determines that the filtering MAC control element is not provided, the user equipment may assume that a list of transmission configuration indication (TCI) states, that can be referred for the transmission configuration indication (TCI) state activation MAC control element, to be the transmission configuration indication (TCI) states that are associated with a current serving cell to be filtered or considered for the activation.

An example embodiment may be provided with a method comprising: receiving a MAC control element with a user equipment, where the MAC control element comprises information regarding a list of mobility candidate target cells; based at least partially upon the receiving of the MAC control element, performing an operation with the information, where the information comprises the list, and where the operation comprises using the list for transmission configuration indication activation or indication, where the information comprises a filtering condition, where the operation comprises using the filtering condition to filter the list of mobility candidate target cells into a smaller filtered list of the mobility candidate target cells; and using the smaller filtered list of the mobility candidate target cells by the user equipment for transmission configuration indication activation or indication, where the operation comprises considering transmission configuration indication states from a common pool of the transmission configuration indication states of mobility candidate target cells only associated with the mobility candidate target cells indicated in the MAC control element.

An example embodiment may be provided with a method comprising: receiving a common pool of transmission configuration indication (TCI) states comprising TCI states of one more mobility candidate target cells with a user equipment; receiving a MAC control element with the user equipment, where the MAC control element comprises a filtering condition; based, at least partially, upon the receiving of the MAC control element, the user equipment using the filtering condition to filter a list of the mobility candidate target cells into a smaller filtered list of the mobility candidate target cells; and the user equipment selecting the TCI states, from the common pool comprising the TCI states of the one or more mobility candidate target cells, only associated with the smaller filtered list of the mobility candidate target cells to create a smaller filtered list of the TCI states.

An example embodiment may be provided with an apparatus comprising: at least one processor; and at least one non-transitory memory storing instructions that, when executed with the at least one processor, cause the apparatus to perform: receiving a MAC control element with the apparatus, where the MAC control element comprises information regarding a list of mobility candidate target cells; and based, at least partially, upon the receiving of the MAC control element, an operation with the information.

The information may comprise the list, and where the operation comprises using the list for transmission configuration indication (TCI) activation or indication. The list of mobility candidate target cells may comprise at least one of: a list of identifications of mobility candidate target cells, or at least one mobility candidate target cell configuration, or a list of identifications used to indicate mobility candidate target cells. The list of identifications used to indicate mobility candidate target cells may comprise a physical cell identifier. The list of mobility candidate target cells may comprise a current serving cell for the user equipment. The information may comprise a filtering condition, and where the operation comprises using the filtering condition to filter the list of mobility candidate target cells into a smaller filtered list of the mobility candidate target cells. The instructions, when executed with the at least one processor, may cause the apparatus to perform using the smaller filtered list of the mobility candidate target cells by the user equipment for transmission configuration indication (TCI) activation or indication. The operation may comprise considering transmission configuration indication (TCI) states from a common pool of the TCI states of mobility candidate target cells only associated with the mobility candidate target cells indicated in the MAC control element. The instructions, when executed with the at least one processor, may cause the apparatus to perform using the filtered list of the TCI states as reference for a further transmission configuration indication TCI activation or/and indication for triggered mobility (LTM). The operation may comprise updating or overriding an earlier list of the of the mobility candidate target cells with the filtered list of the mobility candidate target cells. The operation may comprise adding at least a portion of the filtered list of the mobility candidate target cells with at least a portion of an earlier list of the of the mobility candidate target cells to form an at least partially combined list. The operation may comprise limiting a number of the mobility candidate target cells on the filtered list of the mobility candidate target cells based upon a predetermined parameter. The predetermined parameter may be a number. The MAC control element may be configured to be used for a unified transmission configuration indication (TCI) state activation and/or deactivation. The information may be a candidate cell index in the MAC control element, where the index comprises a list of transmission configuration indication (TCI) states associated with the indicated mobility candidate target cells to be considered for use by the user equipment. The candidate cell index may be used as a reference list from which the TCI states to be activated or indicated. The information may comprise a field of the MAC control element which indicates a bit-map. A number of bits of the bit-map may equals a number of configured ones of the mobility candidate target cells. The mobility candidate target cells may be ordered in an order of associated triggered mobility IDs and an 'i'th candidate cell in the order is linked with an 'i' bit in the bit-map in the MAC control element. A one ("1") value of a bit in the bit-map indicates that a TCI state of a respective candidate cell is selected for the reference list. The information may comprise an indication whether filtering provides an active filtering list of transmission configuration indication (TCI) state for the MAC control element based transmission configuration indication (TCI) state activation with at least one of: beam indication for one or more LTM candidate cells, intra cell beam management; inter-cell beam management; or a combination of one or more of the above. The instructions, when executed with the at least one processor, may cause the apparatus to perform, when the MAC control element is a filtering MAC CE which is received by the user equipment, the user equipment considers any activated transmission configuration indication (TCI) states to be not activated. The instructions, when executed with the at least one processor, may cause the apparatus to perform, when the MAC control element is a filtering MAC CE which is received by the user equipment, the user equipment considers any activated transmission configuration indication (TCI) states than a serving cell transmission configuration indication (TCI) states to be not activated. The instructions, when executed with the at least one processor, may cause the apparatus to perform determining whether the MAC control element comprises the information, and not performing the operation when the user equipment determines that the MAC control element does not comprises the information. The instructions, when executed with the at least one processor, may cause the apparatus to perform determining whether the MAC control element is received by the user equipment, and performing a predetermined process when the user equipment determines that the MAC control element is not received by the user equipment. The instructions, when executed with the at least one processor, may cause the apparatus to perform, when the user equipment determines that the filtering MAC control element is not provided, the user equipment assumes that a list of transmission configuration indication (TCI) states, that can be referred for the transmission configuration indication (TCI) state activation MAC control element, to be the transmission configuration indication (TCI) states that are associated with a current serving cell to be filtered or considered for the activation.

An example embodiment may be provided with an apparatus comprising: means for receiving a MAC control element with the apparatus, where the MAC control element comprises information regarding a list of mobility candidate target cells; and means for, based at least partially upon the receiving of the MAC control element, performing an operation with the information.

An example embodiment may be provided with a non-transitory program storage device readable by an apparatus, tangibly embodying a program of instructions executable with the apparatus for performing operations, the operations comprising: receiving a MAC control element with the apparatus, where the MAC control element comprises information regarding a list of mobility candidate target cells; and based, at least partially, upon the receiving of the MAC control element, performing an operation with the information.

Referring also to Fig. 7, an example embodiment may be provided with a method comprising: determining a first pool of transmission configuration indication (TCI) states for mobility candidate target cells as indicated with block 702; and determining a filter to be applied to the first pool for determining a second pool which is smaller than the first pool, where the second pool is a filtered pool of the first pool as indicated with block 704.

The method may further comprise using the filter to form the second filtered pool. The method may further comprise sending the second filtered pool to a user equipment. The sending of the second filtered pool to a user equipment may comprise sending information regarding the second filtered pool to the user equipment with a MAC control element. The method may further comprise sending the filter to a user equipment for the user equipment to use the filter to form the second filtered pool.. The sending of the filter to the user equipment may comprise sending information regarding the filter to the user equipment with a MAC control element.

An example embodiment may be provided with an apparatus comprising: at least one processor; and at least one non-transitory memory storing instructions that, when executed with the at least one processor, cause the apparatus to perform: determining a first pool of transmission configuration indication (TCI) states for mobility candidate target cells; and determining a filter to be applied to the first pool for determining a second pool which is smaller than the first pool, where the second pool is a filtered pool of the first pool.

An example embodiment may be provided with an apparatus comprising: means for determining a first pool of transmission configuration indication (TCI) states for mobility candidate target cells; and means for determining a filter to be applied to the first pool for determining a second pool which is smaller than the first pool, where the second pool is a filtered pool of the first pool.

An example embodiment may be provided with a non-transitory program storage device readable by an apparatus, tangibly embodying a program of instructions executable with the apparatus for performing operations, the operations comprising: determining a first pool of transmission configuration indication (TCI) states for mobility candidate target cells; and determining a filter to be applied to the first pool for determining a second pool which is smaller than the first pool, where the second pool is a filtered pool of the first pool.

Referring also to Fig. 8, an example embodiment may be provided with a method comprising: determining, with a user equipment, whether the user equipment has received a MAC control element with a predetermined type of information relating to transmission configuration indication (TCI) states for mobility candidate target cells as indicated with block 802; and performing a first operation when the user equipment has determined that the MAC control element has been received as indicated with block 804; and performing a different second operation when the user equipment has determined that the MAC control element has not been received. The first operation may comprise a filtering operation using the information as indicated with block 806.

An example embodiment may be provided with an apparatus comprising: at least one processor; and at least one non-transitory memory storing instructions that, when executed with the at least one processor, cause the apparatus to perform: determining, with the apparatus, whether the apparatus has received a MAC control element with a predetermined type of information relating to transmission configuration indication (TCI) states for mobility candidate target cells; and performing a first operation when the apparatus has determined that the MAC control element has been received; and performing a different second operation when the apparatus has determined that the MAC control element has not been received.

An example embodiment may be provided with an apparatus comprising: means for determining, with a user equipment, whether the user equipment has received a MAC control element with a predetermined type of information relating to transmission configuration indication (TCI) states for mobility candidate target cells; and means for performing a first operation when the user equipment has determined that the MAC control element has been received; and means for performing a different second operation when the user equipment has determined that the MAC control element has not been received.

An example embodiment may be provided with a non-transitory program storage device readable by an apparatus, tangibly embodying a program of instructions executable with the apparatus for performing operations, the operations comprising: determining, with the apparatus, whether the apparatus has received a MAC control element with a predetermined type of information relating to transmission configuration indication (TCI) states for mobility candidate target cells; and performing a first operation when the apparatus has determined that the MAC control element has been received; and performing a different second operation when the apparatus has determined that the MAC control element has not been received.

The term "non-transitory," as used herein, is a limitation of the medium itself (i.e., tangible, not a signal) as opposed to a limitation on data storage persistency (e.g., RAM vs. ROM).

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
   (iii) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modifications and variances which fall within the scope of the appended claims.
Various non-limiting example embodiments are described in the following numbered paragraphs.
1. A method comprising:
   receiving a MAC control element with a user equipment, where the MAC control element comprises information regarding a list of mobility candidate target cells; and
   based, at least partially, upon the receiving of the MAC control element, performing an operation with the information.
2. The method according to paragraph 1 where the information comprises a filtering condition, and where the operation comprises using the filtering condition to filter the list of mobility candidate target cells into a smaller filtered list of the mobility candidate target cells.
3. The method according to any of the preceding paragraphs where the information comprises the list, and where the operation comprises using the list for transmission configuration indication (TCI) activation or indication.
4. The method according to paragraph 3 where the list of mobility candidate target cells comprises at least one of:
   a list of identifications of mobility candidate target cells, or
   at least one mobility candidate target cell configuration, or
   a list of identifications used to indicate mobility candidate target cells.
5. The method according to paragraph 4 where the list of identifications used to indicate mobility candidate target cells comprises a physical cell identifier.
6. The method of any of the preceding paragraphs where the list of mobility candidate target cells comprises a current serving cell for the user equipment.
7. The method according to paragraph 3 further comprising considering the list of mobility candidate target cells provided in the MAC control element as the filtered list of the mobility candidate target cells by the user equipment for transmission configuration indication (TCI) activation or indication.
8. The method according to any of the preceding paragraphs where the operation comprises forming the filtered list of the TCI states considering transmission configuration indication (TCI) states from a common pool of the TCI states of mobility candidate target cells only associated with the filtered list of the mobility candidate target cells.
9. The method according to any of the preceding paragraphs further comprising using the filtered list of the TCI states as reference for a further transmission configuration indication TCI activation or/and indication for triggered mobility (LTM).
10. The method according to any of the preceding paragraphs where the operation comprises updating or overriding an earlier list of the of the mobility candidate target cells with the filtered list of the mobility candidate target cells.
11. The method according to any of the preceding paragraphs where the operation comprises adding at least a portion of the filtered list of the mobility candidate target cells with at least a portion of an earlier list of the of the mobility candidate target cells to form an at least partially combined list.
12. The method according to any of the preceding paragraphs where the operation comprises limiting a number of the mobility candidate target cells on the filtered list of the mobility candidate target cells based upon a predetermined parameter.
13. The method according to any of the preceding paragraphs where the operation comprises limiting a number of transmission configuration indication (TCI) states based upon a predetermined parameter.
14. The method according to any of paragraphs 12-13 where the predetermined parameter(s) is a number.
15. The method according to any of paragraphs 2-14 where the MAC control element is configured to be used for a unified transmission configuration indication (TCI) state activation and/or deactivation.
16. The method according to any of paragraphs 2-15 where the information is a candidate cell index in the MAC control element, where a list of transmission configuration indication (TCI) states associated with the indicated mobility candidate cell index to be considered for use by the user equipment.
17. The method according to paragraph 16 where the list of TCI states is used as a reference list from which the TCI states to be activated or indicated.
18. The method according to any of paragraphs 2-16 where the information comprises a field of the MAC control element which indicates a bit-map.
19. The method according to paragraph 18 where a number of bits of the bit-map equals a number of configured ones of the mobility candidate target cells.
20. The method according to any of paragraphs 18-19 where the mobility candidate target cells are ordered in an order of associated triggered mobility IDs and an `i'th candidate cell in the order is linked with an 'i' bit in the bit-map in the MAC control element.
21. The method according to any of paragraphs 18-20 where a one ("1") value of a bit in the bit-map indicates that a TCI state of a respective candidate cell is selected for the reference list.
22. The method according to paragraph 1 where the information comprises an indication whether filtering provides an active filtering list of transmission configuration indication (TCI) state for the MAC control element based transmission configuration indication (TCI) state activation with at least one of:
   beam indication for one or more LTM candidate cells,
   intra cell beam management for the current serving cell;
   inter-cell beam management for the current serving cell; or
   a combination of one or more of the above.
23. The method according to any of the preceding paragraphs further comprising when the MAC control element is a filtering MAC CE which is received by the user equipment, the user equipment considers any activated transmission configuration indication (TCI) states to be not activated.
24. The method according to any of the preceding paragraphs further comprising when the MAC control element is a filtering MAC CE which is received by the user equipment, the user equipment considers any activated transmission configuration indication (TCI) states than a serving cell transmission configuration indication (TCI) states to be not activated.
25. The method according to any of the preceding paragraphs further comprising determining whether the MAC control element comprises the information, and not performing the operation when the user equipment determines that the MAC control element does not comprises the information.
26. The method according to any of the preceding paragraphs further comprising determining whether the MAC control element is received by the user equipment, and performing a predetermined process when the user equipment determines that the MAC control element is not received by the user equipment.
27. The method according to paragraph 26 where, when the user equipment determines that the filtering MAC control element is not provided, the user equipment assumes that a list of transmission configuration indication (TCI) states, that can be referred for the transmission configuration indication (TCI) state activation MAC control element, to be the transmission configuration indication (TCI) states that are associated with a current serving cell to be filtered or considered for the activation.
28. A method comprising:
   receiving a MAC control element with a user equipment, where the MAC control element comprises information regarding a list of mobility candidate target cells; and
   based, at least partially, upon the receiving of the MAC control element, performing an operation with the information, where the information comprises the list, and where the operation comprises using the list for transmission configuration indication activation or indication, where the information comprises a filtering condition, where the operation comprises using the filtering condition to filter the list of mobility candidate target cells into a smaller filtered list of the mobility candidate target cells; and
   using the smaller filtered list of the mobility candidate target cells by the user equipment for transmission configuration indication activation or indication, where the operation comprises considering transmission configuration indication states from a common pool of the transmission configuration indication states of mobility candidate target cells only associated with the mobility candidate target cells indicated in the MAC control element.
29. A method comprising:
   receiving a common pool of transmission configuration indication (TCI) states comprising TCI states of one more mobility candidate target cells with a user equipment;
   receiving a MAC control element with the user equipment, where the MAC control element comprises a filtering condition;
   based, at least partially, upon the receiving of the MAC control element, the user equipment using the filtering condition to filter a list of the mobility candidate target cells into a smaller filtered list of the mobility candidate target cells; and
   the user equipment selecting the TCI states, from the common pool comprising the TCI states of the one or more mobility candidate target cells, only associated with the smaller filtered list of the mobility candidate target cells to create a smaller filtered list of the TCI states.
30. An apparatus comprising:
   at least one processor; and
   at least one non-transitory memory storing instructions that, when executed with the at least one processor, cause the apparatus to perform:
      receiving a MAC control element with the apparatus, where the MAC control element comprises information regarding a list of mobility candidate target cells; and
      based, at least partially, upon the receiving of the MAC control element, an operation with the information.
31. The apparatus according to paragraph 30 where the information comprises the list, and where the operation comprises using the list for transmission configuration indication (TCI) activation or indication.
32. The apparatus according to paragraph 31 where the list of mobility candidate target cells comprises at least one of:
   a list of identifications of mobility candidate target cells, or
   at least one mobility candidate target cell configuration, or
   a list of identifications used to indicate mobility candidate target cells.
33. The apparatus according to paragraph 32 where the list of identifications used to indicate mobility candidate target cells comprises a physical cell identifier.
34. The apparatus according to any of paragraphs 30-33 where the list of mobility candidate target cells comprises a current serving cell for the user equipment.
35. The apparatus according to paragraph 30 where the information comprises a filtering condition, and where the operation comprises using the filtering condition to filter the list of mobility candidate target cells into a smaller filtered list of the mobility candidate target cells.
36. The apparatus according to paragraph 31 where the instructions, when executed with the at least one processor, cause the apparatus to perform considering the list of mobility candidate target cells provided in the MAC control element as the filtered list of the mobility candidate target cells by the user equipment for transmission configuration indication (TCI) activation or indication.
37. The apparatus according to any of paragraphs 35-36 or where the operation comprises forming the filtered list of the TCI states considering transmission configuration indication (TCI) states from a common pool of the TCI states of mobility candidate target cells only associated with the mobility candidate target cells indicated in the MAC control element.
38. The apparatus according to any of paragraphs 35-37 where the instructions, when executed with the at least one processor, cause the apparatus to perform using the filtered list of the TCI states as reference for a further transmission configuration indication TCI activation or/and indication for triggered mobility (LTM).
39. The apparatus according to any of paragraphs 35-37 where the operation comprises updating or overriding an earlier list of the of the mobility candidate target cells with the filtered list of the mobility candidate target cells.
40. The apparatus according to any of paragraphs 35-37 where the operation comprises adding at least a portion of the filtered list of the mobility candidate target cells with at least a portion of an earlier list of the of the mobility candidate target cells to form an at least partially combined list.
41. The apparatus according to any of paragraphs 35-40 where the operation comprises limiting a number of the mobility candidate target cells on the filtered list of the mobility candidate target cells based upon a predetermined parameter.
42. The apparatus according to paragraph 41 where the predetermined parameter is a number.
43. The apparatus according to any of paragraphs 35-42 where the MAC control element is configured to be used for a unified transmission configuration indication (TCI) state activation and/or deactivation.
44. The apparatus according to any of paragraphs 35-43 where the information is a candidate cell index in the MAC control element, where the index comprises a list of transmission configuration indication (TCI) states associated with the indicated mobility candidate target cells to be considered for use by the user equipment.
45. The apparatus according to paragraph 44 where the candidate cell index is used as a reference list from which the TCI states to be activated or indicated.
46. The apparatus according to any of paragraphs 31-45 where the information comprises a field of the MAC control element which indicates a bit-map.
47. The apparatus according to paragraph 46 where a number of bits of the bit-map equals a number of configured ones of the mobility candidate target cells.
48. The apparatus according to any of paragraphs 46-47 where the mobility candidate target cells are ordered in an order of associated triggered mobility IDs and an `i'th candidate cell in the order is linked with an 'i' bit in the bit-map in the MAC control element.
49. The apparatus according to any of paragraphs 46-48 where a one ("1") value of a bit in the bit-map indicates that a TCI state of a respective candidate cell is selected for the reference list.
50. The apparatus according to paragraph 30 where the information comprises an indication whether filtering provides an active filtering list of transmission configuration indication (TCI) state for the MAC control element based transmission configuration indication (TCI) state activation with at least one of:
   beam indication for one or more LTM candidate cells,
   intra cell beam management;
   inter-cell beam management; or
   a combination of one or more of the above.
51. The apparatus according to any of paragraphs 30-50 where the instructions, when executed with the at least one processor, cause the apparatus to perform, when the MAC control element is a filtering MAC CE which is received by the user equipment, the user equipment considers any activated transmission configuration indication (TCI) states to be not activated.
52. The apparatus according to any of paragraphs 30-51 where the instructions, when executed with the at least one processor, cause the apparatus to perform, when the MAC control element is a filtering MAC CE which is received by the user equipment, the user equipment considers any activated transmission configuration indication (TCI) states than a serving cell transmission configuration indication (TCI) states to be not activated.
53. The apparatus according to any of paragraphs 30-52 where the instructions, when executed with the at least one processor, cause the apparatus to perform determining whether the MAC control element comprises the information, and not performing the operation when the user equipment determines that the MAC control element does not comprises the information.
54. The apparatus according to any of paragraphs 30-53 where the instructions, when executed with the at least one processor, cause the apparatus to perform determining whether the MAC control element is received by the user equipment, and performing a predetermined process when the user equipment determines that the MAC control element is not received by the user equipment.
55. The apparatus according to paragraph 54 where the instructions, when executed with the at least one processor, cause the apparatus to perform, when the user equipment determines that the filtering MAC control element is not provided, the user equipment assumes that a list of transmission configuration indication (TCI) states, that can be referred for the transmission configuration indication (TCI) state activation MAC control element, to be the transmission configuration indication (TCI) states that are associated with a current serving cell to be filtered or considered for the activation.
56. An apparatus comprising:
   means for receiving a MAC control element with the apparatus, where the MAC control element comprises information regarding a list of mobility candidate target cells; and
   means for, based at least partially upon the receiving of the MAC control element, performing an operation with the information.
57. A non-transitory program storage device readable by an apparatus, tangibly embodying a program of instructions executable with the apparatus for performing operations, the operations comprising:
   receiving a MAC control element with the apparatus, where the MAC control element comprises information regarding a list of mobility candidate target cells; and
   based, at least partially, upon the receiving of the MAC control element, performing an operation with the information.
58. A method comprising:
   determining a first pool of transmission configuration indication (TCI) states for mobility candidate target cells; and
   determining a filter to be applied to the first pool for determining a second pool which is smaller than the first pool, where the second pool is a filtered pool of the first pool.
59. The method of paragraph 58 further comprising using the filter to form the second filtered pool.
60. The method of paragraph 59 further comprising sending the second filtered pool to a user equipment.
61. The method of paragraph 60 where the sending of the second filtered pool to a user equipment comprises sending information regarding the second filtered pool to the user equipment with a MAC control element.
62. The method of paragraph 58 further comprising sending the filter to a user equipment for the user equipment to use the filter to form the second filtered pool.
63. The method of paragraph 62 where the sending of the filter to the user equipment comprises sending information regarding the filter to the user equipment with a MAC control element.
64. An apparatus comprising:
   at least one processor; and
   at least one non-transitory memory storing instructions that, when executed with the at least one processor, cause the apparatus to perform:
      determining a first pool of transmission configuration indication (TCI) states for mobility candidate target cells; and
      determining a filter to be applied to the first pool for determining a second pool which is smaller than the first pool, where the second pool is a filtered pool of the first pool.
65. An apparatus comprising:
   means for determining a first pool of transmission configuration indication (TCI) states for mobility candidate target cells; and
   means for determining a filter to be applied to the first pool for determining a second pool which is smaller than the first pool, where the second pool is a filtered pool of the first pool.
66. A non-transitory program storage device readable by an apparatus, tangibly embodying a program of instructions executable with the apparatus for performing operations, the operations comprising:
   determining a first pool of transmission configuration indication (TCI) states for mobility candidate target cells; and
   determining a filter to be applied to the first pool for determining a second pool which is smaller than the first pool, where the second pool is a filtered pool of the first pool.
67. A method comprising:
   determining, with a user equipment, whether the user equipment has received a MAC control element with a predetermined type of information relating to transmission configuration indication (TCI) states for mobility candidate target cells; and
   performing a first operation when the user equipment has determined that the MAC control element has been received; and
   performing a different second operation when the user equipment has determined that the MAC control element has not been received.
68. The method according to paragraph 67 where the first operation comprises a filtering operation using the information.
69. An apparatus comprising:
   at least one processor; and
   at least one non-transitory memory storing instructions that, when executed with the at least one processor, cause the apparatus to perform:
      determining, with the apparatus, whether the apparatus has received a MAC control element with a predetermined type of information relating to transmission configuration indication (TCI) states for mobility candidate target cells; and
      performing a first operation when the apparatus has determined that the MAC control element has been received; and
      performing a different second operation when the apparatus has determined that the MAC control element has not been received.
70. An apparatus comprising:
   means for determining, with a user equipment, whether the user equipment has received a MAC control element with a predetermined type of information relating to transmission configuration indication (TCI) states for mobility candidate target cells; and
   means for performing a first operation when the user equipment has determined that the MAC control element has been received; and
   means for performing a different second operation when the user equipment has determined that the MAC control element has not been received.
71. A non-transitory program storage device readable by an apparatus, tangibly embodying a program of instructions executable with the apparatus for performing operations, the operations comprising:
   determining, with the apparatus, whether the apparatus has received a MAC control element with a predetermined type of information relating to transmission configuration indication (TCI) states for mobility candidate target cells; and
   performing a first operation when the apparatus has determined that the MAC control element has been received; and
   performing a different second operation when the apparatus has determined that the MAC control element has not been received.

## Claims

1. An apparatus comprising:
at least one processor; and
at least one non-transitory memory storing instructions that, when executed with the at least one processor, cause the apparatus to perform:
receiving a MAC control element with the apparatus, where the MAC control element comprises information regarding a list of mobility candidate target cells; and
based, at least partially, upon the receiving of the MAC control element, an operation with the information.

2. The apparatus as claimed in claim 1 where the information comprises the list, and where the operation comprises using the list for transmission configuration indication (TCI) activation or indication.

3. The apparatus as claimed in claim 1 or 2 where the information comprises a filtering condition, and where the operation comprises using the filtering condition to filter the list of mobility candidate target cells into a smaller filtered list of the mobility candidate target cells.

4. The apparatus as claimed in claim 2 or 3 where the instructions, when executed with the at least one processor, cause the apparatus to perform considering the list of mobility candidate target cells provided in the MAC control element as a filtered list of the mobility candidate target cells by the user equipment for transmission configuration indication (TCI) activation or indication.

5. The apparatus as claimed in any one of claims 3 or 4 where the operation comprises forming the filtered list of the TCI states considering transmission configuration indication (TCI) states from a common pool of the TCI states of mobility candidate target cells only associated with the mobility candidate target cells indicated in the MAC control element.

6. The apparatus as claimed in any one of claims 3 to 5, where the instructions, when executed with the at least one processor, cause the apparatus to perform using the filtered list of the TCI states as reference for a further transmission configuration indication TCI activation or/and indication for triggered mobility (LTM).

7. The apparatus as claimed in any one of claims 3 to 6, where the operation comprises at least one of the following:
updating or overriding an earlier list of the of the mobility candidate target cells with the filtered list of the mobility candidate target cells;
adding at least a portion of the filtered list of the mobility candidate target cells with at least a portion of an earlier list of the of the mobility candidate target cells to form an at least partially combined list; or limiting a number of the mobility candidate target cells on the filtered list of the mobility candidate target cells based upon a predetermined parameter.

8. The apparatus as claimed in any one of claims 3-7, where the MAC control element is configured to be used for a unified transmission configuration indication (TCI) state activation and/or deactivation.

9. The apparatus as claimed in any one of claims 3-8, where the information is a candidate cell index in the MAC control element, where the index comprises a list of transmission configuration indication (TCI) states associated with the indicated mobility candidate target cells to be considered for use by the user equipment; and where the candidate cell index is used as a reference list from which the TCI states to be activated or indicated.

10. The apparatus as claimed in any one of claims 2-9 where the information comprises a field of the MAC control element which indicates a bit-map, and where a number of bits of the bit-map equals a number of configured ones of the mobility candidate target cells; and where the mobility candidate target cells are ordered in an order of associated triggered mobility IDs and an `i'th candidate cell in the order is linked with an 'i' bit in the bit-map in the MAC control element.

11. The apparatus as claimed in claim 1 where the information comprises an indication whether filtering provides an active filtering list of transmission configuration indication (TCI) state for the MAC control element based transmission configuration indication (TCI) state activation with at least one of:
beam indication for one or more LTM candidate cells,
intra cell beam management;
inter-cell beam management; or
a combination of one or more of the above.

12. The apparatus as claimed in any one of claims 1-11, where the instructions, when executed with the at least one processor, cause the apparatus to perform, when the MAC control element is a filtering MAC CE which is received by the user equipment, the user equipment considers at least one of the following: any activated transmission configuration indication (TCI) states to be not activated; or any activated transmission configuration indication (TCI) states other than a serving cell transmission configuration indication (TCI) states to be not activated.

13. The apparatus as claimed in any one of claims 1-12 where the instructions, when executed with the at least one processor, cause the apparatus to perform determining whether the MAC control element is received by the user equipment, and performing a predetermined process when the user equipment determines that the MAC control element is not received by the user equipment; and when the user equipment determines that the filtering MAC control element is not provided, the user equipment assumes that a list of transmission configuration indication (TCI) states, that can be referred for the transmission configuration indication (TCI) state activation MAC control element, to be the transmission configuration indication (TCI) states that are associated with a current serving cell to be filtered or considered for the activation.

14. An apparatus comprising:
at least one processor; and
at least one non-transitory memory storing instructions that, when executed with the at least one processor, cause the apparatus to perform:
determining a first pool of transmission configuration indication (TCI) states for mobility candidate target cells; and
determining a filter to be applied to the first pool for determining a second pool which is smaller than the first pool, where the second pool is a filtered pool of the first pool.

15. An apparatus comprising:
at least one processor; and
at least one non-transitory memory storing instructions that, when executed with the at least one processor, cause the apparatus to perform:
determining, with the apparatus, whether the apparatus has received a MAC control element with a predetermined type of information relating to transmission configuration indication (TCI) states for mobility candidate target cells; and
performing a first operation when the apparatus has determined that the MAC control element has been received; and
performing a different second operation when the apparatus has determined that the MAC control element has not been received.
